(19)

Europäisches
Patentamt
European
Patent Office
Office européen
des brevets

(11)  **EP 1 964 411 B1**

(12)  **EUROPEAN PATENT SPECIFICATION**

(45) Date of publication and mention
of the grant of the patent:
**11.01.2017  Bulletin 2017/02**

(21) Application number: **06827384.6**

(22) Date of filing: **02.11.2006**

(51) Int Cl.:
*H04N 19/147* (2014.01)    *H04N 19/172* (2014.01)
*H04N 19/15* (2014.01)    *H04N 19/129* (2014.01)
*H04N 19/61* (2014.01)    *H04N 19/117* (2014.01)
*H04N 19/132* (2014.01)    *H04N 19/895* (2014.01)

(86) International application number:
**PCT/US2006/042826**

(87) International publication number:
**WO 2007/075220 (05.07.2007 Gazette 2007/27)**

(54) **METHOD AND APPARATUS FOR OPTIMIZATION OF FRAME SELECTION FOR FLEXIBLE MACROBLOCK ORDERING (FMO) VIDEO ENCODING**

VERFAHREN UND VORRICHTUNG ZUR OPTIMIERUNG DER RAHMENAUSWAHL ZUR VIDEOCODIERUNG MIT FLEXIBLER MAKROBLOCK-ANORDNUNG (FMO)

PROCEDE ET APPAREIL D'OPTIMISATION D'UNE SELECTION DE TRAME POUR UN CODAGE VIDEO PAR ORDONNANCEMENT FLEXIBLE DE MACROBLOCS (FMO)

(84) Designated Contracting States:
**DE FR GB**

(30) Priority: **22.12.2005  US 753294 P**

(43) Date of publication of application:
**03.09.2008  Bulletin 2008/36**

(73) Proprietor: **Thomson Licensing**
**92130 Issy-les-Moulineaux (FR)**

(72) Inventors:
• **WU, Zhenyu**
**Plainsboro, NJ 08536 (US)**
• **BOYCE, Jill, MacDonald**
**Manalapan, NJ 07726 (US)**

(74) Representative: **Huchet, Anne et al**
**TECHNICOLOR**
**1-5, rue Jeanne d'Arc**
**92130 Issy-les-Moulineaux (FR)**

(56) References cited:
• **LAMBERT ET AL: "Flexible macroblock ordering in H.264/AVC" JOURNAL OF VISUAL COMMUNICATION AND IMAGE REPRESENTATION, ACADEMIC PRESS, INC, US, vol. 17, no. 2, 11 August 2005 (2005-08-11), pages 358-375, XP005312629 ISSN: 1047-3203**

• **DHONDT, Y. ET AL.: "Flexible macroblock ordering as a content adaptation tool in H.264/AVC" PROCEEDINGS OF SPIE MULTIMEDIA SYSTEMS AND APPLICATIONS VIII, vol. 6015, 24 October 2005 (2005-10-24), XP007901849**
• **WIEGAND T ET AL: "OVERVIEW OF THE H.264/AVC VIDEO CODING STANDARD" IEEE TRANSACTIONS ON CIRCUITS AND SYSTEMS FOR VIDEO TECHNOLOGY, IEEE SERVICE CENTER, PISCATAWAY, NJ, US, vol. 13, no. 7, July 2003 (2003-07), pages 560-576, XP001169882 ISSN: 1051-8215**
• **JUNG B. ET AL.: "Error Resilient Performance Evaluation of MPEG-4 and H.264" PROCEEDINGS OF SPIE VISUAL COMMUNICATIONS AND IMAGE PROCESSING 2003, vol. 5150, June 2003 (2003-06), pages 1050-1061, XP007901848**
• **KUMAR ET AL: "Error resiliency schemes in H.264/AVC standard" JOURNAL OF VISUAL COMMUNICATION AND IMAGE REPRESENTATION, ACADEMIC PRESS, INC, US, vol. 17, no. 2, 24 August 2005 (2005-08-24), pages 425-450, XP005312632 ISSN: 1047-3203**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates generally to video encoding and, more particularly, to a method and apparatus for optimization of frame selection for flexible macroblock ordering (FMO) video encoding.

BACKGROUND OF THE INVENTION

Flexible Macroblock Ordering (FMO) is a new error resilience tool introduced in the International Organization for Standardization/International Electrotechnical Commission (ISO/IEC) Moving Picture Experts Group-4 (MPEG-4) Part 10 Advanced Video Coding (AVC) standard/International Telecommunication Union, Telecommunication Sector (ITU-T) H.264 standard (hereinafter the "MPEG4/H.264 standard" or simply the "H.264 standard"). FMO improves the error resilience capability of a coded bitstream at the expense of increased bit rate, by splitting the coded picture into more than one slice group. In the JM reference software, if FMO is applied to a Group of Pictures (GOP), every picture in the GOP is coded in the same FMO mode. The property of FMO is then exploited by slice-based error concealment functionality at the decoder to provide improved decoded video quality, in the case of data loss during transmission.

However, as non-slice-based error concealment options become available at the H.264 Joint Model (JM) decoder, different methods can be invoked in the presence of data loss of different types. Therefore, forcing all the frames to be coded in the same FMO mode, without consideration of the decoder-side options and the characteristic of the source, may not be efficient for the extra bit rate spent on FMO coding.

In the H.264 standard, a slice is an integer number of macroblocks- (MBs) ordered consecutively in the raster scan when FMO is not used. In-picture prediction mechanisms specified in the standard are only allowed within the macroblocks of the same slice, hence each slice is self-contained such that it can be independently decoded without the use of data from other slices. A slice group is a set of macroblocks assigned by a macroblock allocation map (MBAmap) which is specified in the corresponding picture parameter set and slice header, and a slice group can be further divided into several slices. FMO is specified when the number of the slice groups in a picture is greater than one. Therefore, a picture can be split into multiple slices and, in this case, the macroblocks in each slice have to be spatially continuous in the raster scan. Alternatively, a picture can be partitioned into multiple slice groups by FMO, so that a flexible macroblock scan pattern, such as checker-board or "foreground-leftover", is allowed based on the MBAmap.

Lambert et al., "Flexible macroblock ordering in H.264/AVC", in the Journal of Visual Communication and Image Representation, Vol. 17, N. 2, pages 358-375, 11 August 2005, discloses an H.264-compatible encoder which can change FMO type over time by reconfiguring Picture Parameter Sets (PPSs).

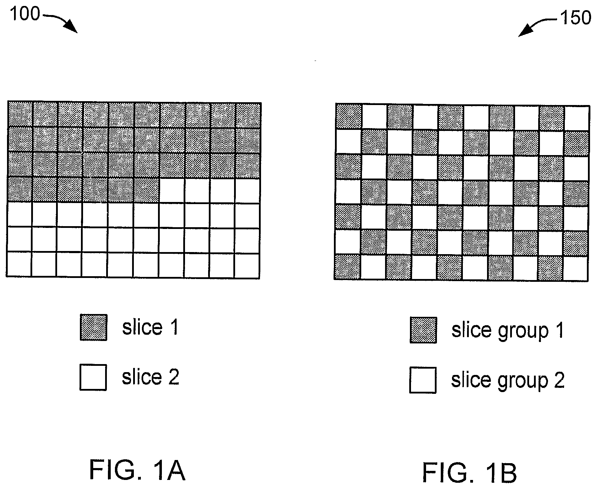

Turning to FIG. 1A, an exemplary division of a picture into two slices is indicated generally by the reference numeral 100. In the example of FIG. 1A, each slice includes spatially continuous and contiguous macroblocks.

Turning to FIG. 1B, an exemplary division of a picture into two slice groups with a checker-board pattern is indicated generally by the reference numeral 150. In the example of FIG. 1B, a slice group has one slice, and the slice includes macroblocks scattered throughout the picture. Compared to the example of FIG. 1A, the macroblocks in each slice group in FIG. 1B are not necessarily spatial neighbors by using FMO. Thus, in-picture prediction is usually less efficient and can affect compression efficiency.

FMO is designed to enhance the robustness of the H.264 standard. First, by using FMO, a picture is divided into multiple slice groups and, hence, multiple slices. Since each slice is self-contained, multiple slices can provide a number of spatially distinct resynchronization points, thus possibly retaining more useful information from a corrupted picture. Second, by employing different mapping patterns in FMO, it is possible that a lost region in a picture is surrounded by correctly decoded neighbors from other slice groups. In conjunction with proper error concealment methods, the lost region can be concealed based on its neighbors with little visual impact. Finally, by using FMO, slices become relatively small and this leads to a reduced packet (slice) loss probability in wireless environments. However, these benefits do come at some cost. By breaking a picture into slices, because of the constrained in-picture prediction, coding efficiency is compromised. In addition, FMO introduces signaling and packetization bit rate overhead.

In the H.264 reference Joint Model (JM) encoder, when FMO is applied, it is indiscriminately applied to each picture in a GOP. In this case, data loss comes in the form of slice loss, and slice-based error concealment is used to conceal the lost data, as described in a first prior art approach. In the first prior art approach, a lost intra slice is concealed based on its spatial neighbors, while a lost inter slice is concealed based on motion vectors predicted from spatial neighbors of the lost inter slice and "side match distortion".

Prior to a second prior art approach describing a "frame-copy" error concealment technique and a "motion vector copy" error concealment technique, slice-based error concealment was the only error concealment implemented inside the JM reference decoder. Now with more error concealment options available, such as, e.g., the second prior art approach, the JM reference decoder has the ability to handle more types of data loss, such as picture loss.

Depending on the characteristics of video pictures and sequences, loss patterns, and so forth, different error concealment methods may provide the best performance for different loss conditions. Therefore, forcing each picture in a GOP to be coded in FMO may not be the most effective way to use the extra bit rate cost associated with FMO.

SUMMARY OF THE INVENTION

These and other drawbacks and disadvantages of the prior art are addressed by the present invention, which is directed to a method and apparatus for optimization of frame selection for flexible macroblock ordering (FMO) video encoding.

According to an aspect of the present invention, there is provided a video encoder. The video encoder includes an encoder for encoding a group of pictures by selecting between a frame mode and at least one flexible macroblock ordering mode. The pictures in the group are allowed to be concurrently encoded in different ones of the frame mode and the least one flexible macroblock ordering mode. The mode selection for each of the pictures in the group is based on an achieved maximum error resilience capability for the group of pictures.

According to another aspect of the present invention, there is provided a method for encoding a group of pictures. The method includes encoding the group of pictures by selecting between a frame mode and at least one flexible macroblock ordering mode. The pictures in the group are allowed to be concurrently encoded in different ones of the frame mode and the least one flexible macroblock ordering mode. The mode selection for each of the pictures in the group is based on an achieved maximum error resilience capability for the group of pictures.

These and other aspects, features and advantages of the present invention will become apparent from the following detailed description of exemplary embodiments, which is to be read in connection with the accompanying drawings.

BRIEF DESCRIPTION OF THE DRAWINGS

The present invention may be better understood in accordance with the following exemplary figures, in which:

FIG. 1A is a diagram for an exemplary division of a picture into two slices;
FIG. 1B is a diagram for an exemplary division of a picture into two slice groups with a checker-board pattern;
FIG. 2 is a diagram for an exemplary video encoder to which the present invention may be applied;
FIG. 3 is a diagram for an exemplary video decoder to which the present invention may be applied;
FIG. 4 is a diagram for an exemplary method for encoding a group of pictures optionally using a flexible macroblock ordering (FMO) encoding mode and/or frame mode; and
FIG. 5 is a diagram for an exemplary method for decoding a group of pictures optionally using frame-based error concealment and/or slice-based error concealment.

DETAILED DESCRIPTION

The present invention is directed to a method and apparatus for optimization of frame selection for flexible macroblock ordering (FMO) video encoding.

The present description illustrates the principles of the present invention. It will thus be appreciated that those skilled in the art will be able to devise various arrangements that, although not explicitly described or shown herein, embody the principles of the invention and are included within its spirit and scope.

All examples and conditional language recited herein are intended for pedagogical purposes to aid the reader in understanding the principles of the invention and the concepts contributed by the inventor to furthering the art, and are to be construed as being without limitation to such specifically recited examples and conditions.

Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the invention. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. It is thus regarded that any means that can provide those functionalities are equivalent to those shown herein.

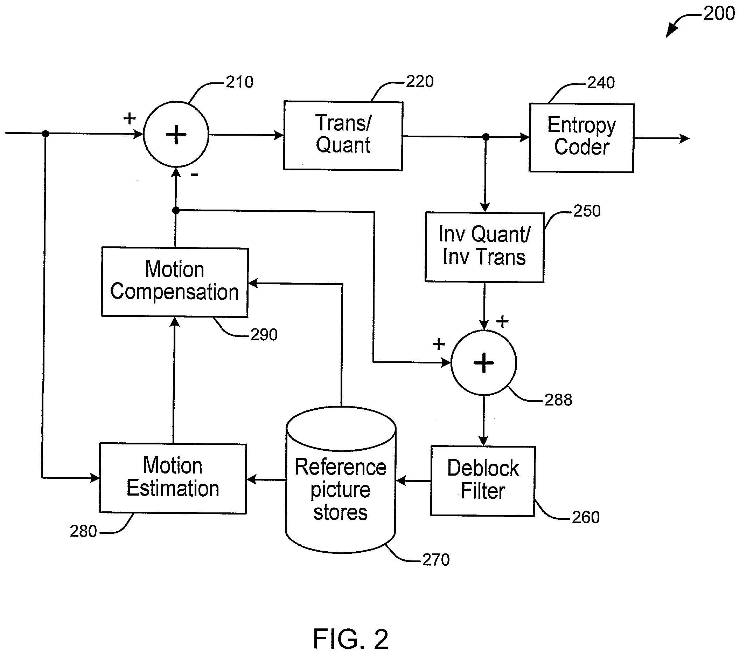

Turning to FIG. 2, an exemplary video encoder to which the present principles may be applied is indicated generally by the reference numeral 200. An input to the video encoder 200 is connected in signal communication with a non-inverting input of a summing junction 210. The output of the summing junction 210 is connected in signal communication with a transformer/quantizer 220. The output of the transformer/quantizer 220 is connected in signal communication with an entropy coder 240, where the output of the entropy coder 240 is an externally available output of the encoder 200.

The output of the transformer/quantizer 220 is further connected in signal communication with an inverse transformer/quantizer 250. An output of the inverse transformer/quantizer 250 is connected in signal communication with a first non-inverting input of a summing junction 288. An output of the summing junction 288 is connected in signal communication with an input of a deblock filter 260. An output of the deblock filter 260 is connected in signal communication with reference picture stores 270. A first output of the reference picture stores 270 is connected in signal communication with a first input of a motion estimator 280. The input to the encoder 200 is further connected in signal communication with a second input of the motion estimator 280. The output of the motion estimator 280 is connected in signal communication with a first input of a motion compensator 290. A second output of the reference picture stores 270 is connected in signal communication with a second input of the motion compensator 290. The output of the motion compensator 290 is connected in signal communication with an inverting input of the summing junction 210 and with a second non-inverting input of the summing junction 288.

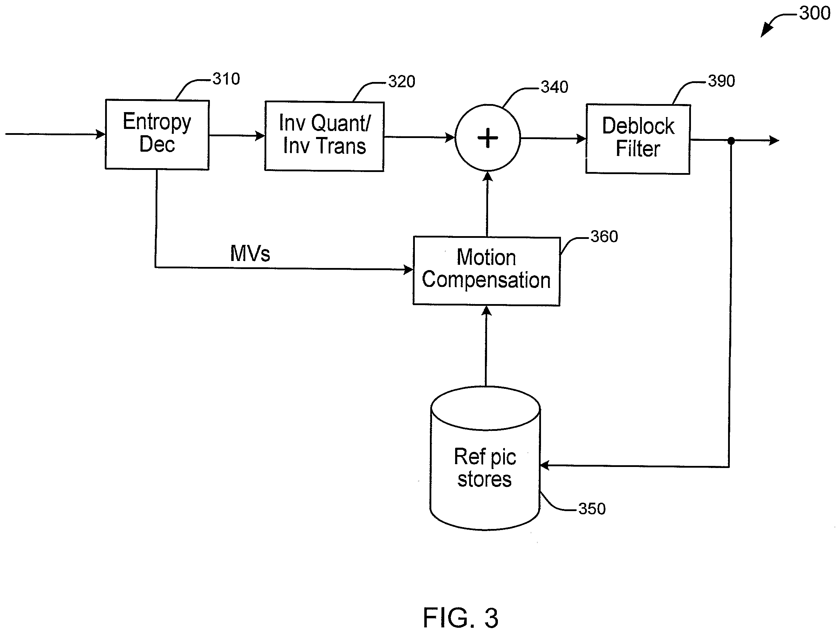

Turning to Figure 3, an exemplary video decoder to which the present principles may be applied is indicated generally by the reference numeral 300. The video decoder 300 includes an entropy decoder 310 for receiving a video sequence. A first output of the entropy decoder 310 is connected in signal communication with an input of an inverse quantizer/transformer 320. An output of the inverse quantizer/transformer 320 is connected in signal communication with a first input of a summing junction 340.

The output of the summing junction 340 is connected in signal communication with a deblock filter 390. An output of the deblock filter 390 is connected in signal communication with reference picture stores 350. The reference picture store 350 is connected in signal communication with a first input of a motion compensator 360. An output of the motion compensator 360 is connected in signal communication with a second input of the summing junction 340. A second output of the entropy decoder 310 is connected in signal communication with a second input of the motion compensator 360. The output of the deblock filter 390 provides the output of the video decoder 300.

The present principles are directed to a method and apparatus that improve the efficiency of Flexible Macroblock Ordering (FMO) coding. Advantageously, the present principles may be utilized with respect to the H.264 standard or any other video coding standard that utilizes FMO coding. In accordance with the present principles, the best pictures in a Group of Pictures (GOP) are selected to be coded in FMO with a total bit rate constraint, such that the error resilience capability can be maximally retained. This effectively results in a bit rate saving which can be used for other purposes. Advantageously, this method can be combined with other error resilience techniques in the H.264 standard as well as other standards. As used herein, the term "maximum error resilience capability" refers to the following. With choices of coding a picture in the frame mode or a flexible macroblock ordering mode (with a constant number of slice groups), the encoder can make a decision to encode a frame within a given bit rate constraint. The optimal selection among all the possible choices can minimize the end-to-end distortion, this achieving the maximum error resilience capability.

It is to be noted that prior to the H.264 reference JM decoder Version 10.0, slice loss was the only error concealment case considered at the decoder. In accordance with the above-referenced first prior art approach, a lost intra slice is concealed based on its spatial neighbors, while a lost inter slice is concealed based on the motion vectors predicted from its spatial neighbors and "side match distortion" criterion. However, since the introduction of the H.264 reference JM decoder Version 10.0, two error concealment methods for entire frame losses have been introduced into the reference decoder, namely the "frame copy" method and the "motion vector copy" method of the above-referenced second prior art approach. The "frame copy" method is simple but is only effective for sequences with little motion. The "motion vector copy" method requires more computation but can be effective for sequences with coherent motions. Therefore, the H.264 reference JM decoder is capable of concealing both lost slices and lost pictures.

Compared to coding a picture in FMO mode, coding in frame mode does not incur any extra signaling or packetization overhead, nor does it introduce compression efficiency degradation. On the other hand, frame-based error concealment generally is not as effective as slice-based error concealment. However, for certain pictures in some sequences, even the simple frame-based error concealment method of the above-referenced second prior art approach can provide comparable performance to slice-based error concealment methods.

In accordance with the principles of the present invention, each picture in a GOP is encoded either in FMO mode or frame mode, and the corresponding error concealment at the JM decoder is invoked in the case of losses, such that the advantages from both modes can be exploited. It should be noted that changing slice group mode on a per frame basis is allowed by the standard, so the bitstreams generated with this functionality are fully standard-compliant. More specifically, each Picture Parameter Set (PPS) specifies a type of slice group mode for a GOP. Thus, if more than one type of slice group mode is used in the GOP, the extra picture parameter sets are specified and sent only once before the video data in the GOP. Then each picture in the GOP refers to the proper set of its mode during encoding and decoding.

The decision of which mode is to be used to code a picture should be made by taking into account factors such as, for example, error concealment effects, channel conditions, and so forth. A rate-distortion optimization framework is described herein after.

Consider a GOP of length $N$ from a video sequence to be coded. For example, the first picture of the GOP maybe coded as an IDR slice and the rest of the pictures of the GOP may be coded as P slices. Each picture of the GOP may be coded as a single slice (frame mode) or broken into several slices with FMO mode. For simplicity, a designated QP may be maintained across the GOP, regardless of the mode in which each picture is coded. Furthermore, a constant slice loss rate may be applied to the slices regardless of their lengths.

Suppose that each slice is subject to a random loss rate of $p$. Consider picture n ($1 \leq n \leq N$) in the GOP to be coded in frame mode. The expected distortion incurred to the GOP by transmitting this picture can be written as follows:

$$E[D_n]_{frame} = (1-p)D_{s,n} + pD_{c,n} \tag{1}$$

where $D_{s,n}$ denotes the source distortion caused by coding the picture in frame mode with the designated QP, and $D_{c,n}$ denotes the distortion occurred when the picture is lost and concealed by the decoder. This distortion includes the concealment distortion for picture $n$ and the error propagation distortion inflicted on the rest of the GOP after the picture.

Consider the same picture $n$ to be coded in FMO mode, where the picture $n$ is broken into $k$ slices. Similarly, the expected distortion incurred to the GOP by transmitting this picture can be written as follows:

$$E[D_n]_{fmo} = (1-p)^k \widetilde{D}_{s,n} + \sum_{i=1}^{k} \binom{k}{i} p^i (1-p)^{k-i} \overline{D}_{c,n}^i \tag{2}$$

where $\tilde{D}_{s,n}$ is the source distortion when the picture is coded in FMO mode with the designated QP, and $\overline{D}_{c,n}^i$ is the distortion when $i$ slices (among the $k$ slices) are lost and concealed. Since different combinations of $i$ lost slices may have different distortion, $\overline{D}_{c,n}^i$ is the value ideally obtained by averaging all possible loss combinations. $\overline{D}_{c,n}^i$ accounts for the error concealment distortion for picture n as well as the distortion propagated to the rest of the GOP.

The total expected distortion when the entire GOP is transmitted can be approximated as follows:

$$E[D_{GOP}] \approx \sum_{n=1}^{N} E[D_n]_{mode} \tag{3}$$

where $mode \in \{frame, fmo\}$.

As previously described, the goal of the described framework is to select the optimal mode to code for each picture given a total bit rate constraint, which can be expressed as follows:

$$\min E[D_{GOP}] \quad s.t. \quad \sum_{n=1}^{N} R_n \leq R_T \tag{4}$$

or according to Equation (3)

$$\min \sum_{n=1}^{N} E[D_n]_{\text{mode}} \quad s.t. \quad \sum_{n=1}^{N} (R_n)_{\text{mode}} \leq R_T \tag{5}$$

where $R_T$ is the given total bit rate for the GOP. Let $R_{frame}$ and $R_{fmo}$ be the resulting bit rates when all the pictures within the GOP are coded in frame and FMO modes, respectively. Obviously, $R_{frame} \leq R_T \leq R_{fino}$.

Let a binary vector $\vec{X} = [x_1, x_2, \cdots, x_N]$ represent the mode in which each picture in the GOP is coded, with a 0-entry indicating frame mode and a 1-entry for FMO mode. Further, define the following vectors as follows:

$$\vec{ED}_{frame} = \{E[D_n]\}_{frame} \tag{6}$$

$$\vec{R}_{frame} = \{R_n\}_{frame} \tag{7}$$

$$\vec{ED}_{fmo} = \{E[D_n]\}_{fmo} \tag{8}$$

$$\vec{R}_{fmo} = \{R_n\}_{fmo} \tag{9}$$

where each element of $\vec{ED}_{frame}$ and $\vec{ED}_{fmo}$ is obtained based on Equations (1) and (2), respectively. Similarly, each element of $\vec{R}_{frame}$ and $\vec{R}_{fmo}$ represent the rates when picture $n$ is coded in frame and FMO modes, respectively.

With the above definitions, the optimization of Equation (5) can be recast into a binary integer programming problem (*Knapsack* problem) as follows:

$$\begin{aligned} \min \quad & [\vec{ED}_{fmo} - \vec{ED}_{frame}]^T \cdot \vec{X} \\ s.t. \quad & [\vec{R}_{fmo} - \vec{R}_{frame}]^T \cdot \vec{X} \leq R_T - R_{frame} \end{aligned} \tag{10}$$

Equation (10) can be readily solved by any applicable algorithm as readily determined by one of ordinary skill in this and related arts including, but not limited to, the branch-and-bound algorithm.

In order to obtain all the necessary information to solve Equation (10), the GOP can be pre-coded with frame mode and FMO mode separately. With the two encodings, the source distortion and bit rate information of each picture for the two modes can be accurately retrieved. However, it is more complicated to obtain the information about the distortion terms caused by error concealment and propagation in Equations (1) and (2). One way is to explicitly drop and conceal the specific slice(s) in the pre-coded sequences and directly measure the distortion caused by the loss across the rest of the GOP for the two modes. Alternatively, the information about the distortion terms can be estimated by more advanced algorithms. A presumption for Equation (3) has to be made then that the error propagation distortion is independent of the mode in which each frame is coded. This is not necessarily true at all times, but the discrepancy is small compared to the values of the occurred loss distortion.

In fact, with more presumptions, source distortion information for frame and FMO modes as included in Equations (1) and (2) are not required. $D_{c,n}$ and $\overline{D}_{c,n}^i$ are redefined as the channel distortion only caused by transmission (that is, the source distortion of picture n is not included). Then, it is presumed that the source distortion and the channel distortion are uncorrelated, and can be further written as follows:

$$E[D_n]_{frame} = (1-p)D_{s,n} + p(D_{s,n} + D_{c,n}) = D_{s,n} + pD_{c,n} \tag{11}$$

Similarly Equation (2) can be re-written as follows:

$$
\begin{aligned}
E[D_n]_{fmo} &= (1-p)^k \overline{D}_{s,n} + \sum_{i=1}^{k} \binom{k}{i} p^i (1-p)^{k-i} (\overline{D}_{s,n} + \widetilde{D}_{c,n}^i) \\
&= \overline{D}_{s,n} + \sum_{i=1}^{k} \binom{k}{i} p^i (1-p)^{k-i} \widetilde{D}_{c,n}^i
\end{aligned}
\tag{12}
$$

where in Equations (11) and (12), the source distortion values of $D_{s,n}$ and $\overline{D}_{s,n}$ for picture n are very close since the same QP is used in frame and FMO modes. When solving the optimization of Equation (10), in the objective function, the difference between $D_{s,n}$ and $\overline{D}_{s,n}$ is negligible compared to the difference between the channel distortions of the two modes. Therefore, the difference between $D_{s,n}$ and $\overline{D}_{s,n}$ can be ignored in the calculation. Hence, the source distortion information for the two modes is not required by the framework.

Experiments have shown that the described framework can retain most of the error resilience capability of FMO, at a reduced bit rate. In certain cases, even stronger error resilience capability can be achieved.

It is further noted that the optimal set of the pictures to be selected to be coded in FMO mode in a video sequence usually does not differ much for loss rates varying in a small range. This means that a bitstream optimized for one loss rate is also close to optimal for another loss rate. Therefore, the described framework is robust to certain loss rate variations. A representative loss rate can thus be selected for optimization for a range of loss rates. A simple method to select such a representative rate is to choose the middle point of the rate range.

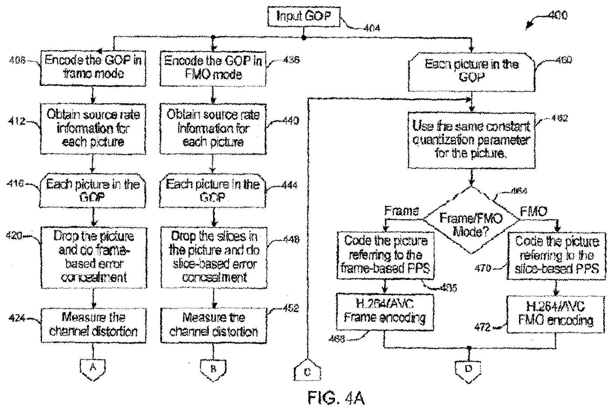

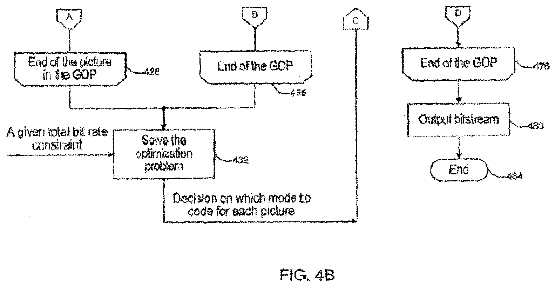

Turning to FIG. 4, an exemplary method for encoding a group of pictures optionally using a flexible macroblock ordering (FMO) encoding mode and/or frame mode is indicated generally by the reference numeral 400.

The method 400 includes a function block 404 that inputs a group of pictures (GOP), and passes control to a function block 408, a function block 436, and a loop limit block 460. The function block 408 encodes the GOP in frame mode, and passes control to a function block 412. The function block 412 obtains source rate information for each picture in the GOP, and passes control to a loop limit block 416. The loop limit block 416 loops over each picture in the GOP, and passes control to a function block 420. The function block 420 drops a current picture, performs frame-based error concealment, and passes control to a function block 424. The function block 424 measures the channel distortion, and passes control to a loop limit block 428. The loop limit block 428 ends the loop over the pictures in the GOP, and passes control to a function block 432. The function block 432 solves the optimization problem (involving the total bit rate constraint) to render a decision on which encoding mode to use to encode each picture on the GOP, and passes control to a function block 462. The function block 462 uses the same constant quantization parameter for the picture, and passes control to a decision block 464. The decision block 464 determines, for a current picture from the GOP, whether or not frame mode or FMO mode is to be used. If frame mode is to be used, then control is passed to a function block 465. Otherwise, if FMO mode is to be used, then control is passed to a function block 470.

The function block 465 codes the picture referring to the frame-based picture parameter set, and passes control to a function block 468. The function block 468 performs frame encoding in accordance with the H.264 standard, and passes control to a loop limit block 476 that ends a loop over each picture in the GOP, and passes control to a function block 480. The function block 480 outputs a corresponding bitstream, and passes control to an end block 484.

The function block 470 codes the picture referring to the slice-based picture parameter set, and passes control to a function block 472. The function block 472 performs FMO encoding in accordance with the H.264 standard, and passes control to the loop limit block 476.

The function block 436 encodes the GOP in FMO mode, and passes control to a function block 440. The function block 440 obtains source rate information for each picture, and passes control to a loop limit block 444. The loop limit block 444 loops over each picture in the GOP, and passes control to a function block 448. The function block 448 drops the slices in the current picture, performs slice-based error concealment, and passes control to a function block 452. The function block 452 measures the channel distortion, and passes control to a loop limit block 456. The loop limit block 456 ends the loop over each picture in the GOP, and passes control to the function block 432.

The loop limit block 460 loops over each picture in the GOP, and passes control to the decision block 464.

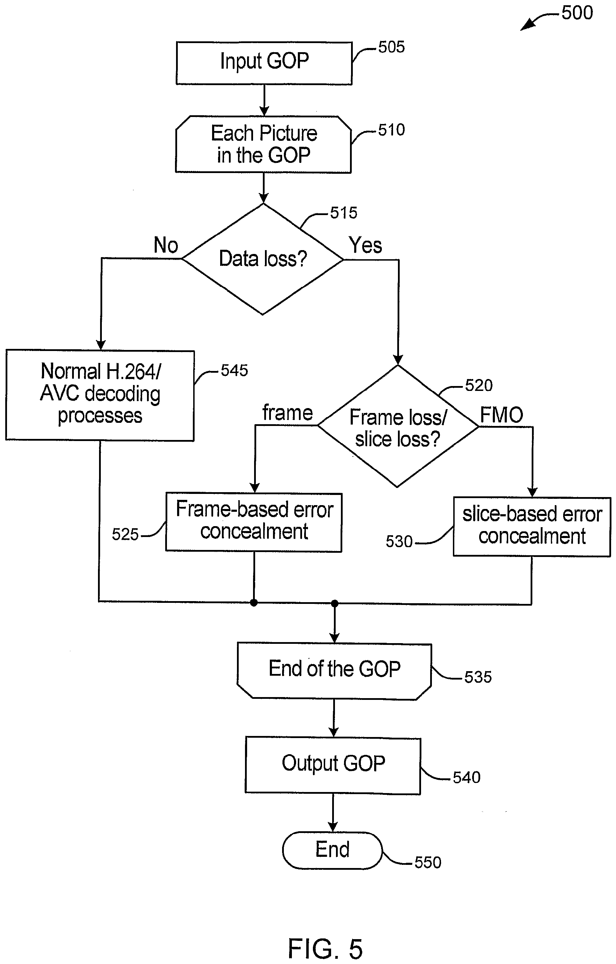

Turning to FIG. 5, an exemplary method for decoding a group of pictures optionally using frame-based error concealment and/or slice-based error concealment is indicated generally by the reference numeral 500.

The method 500 includes a function block 505 that input a group of pictures, and passes control to a loop limit block 510. The loop limit block 510 loops over each picture in the GOP, and passes control to a decision block 515. The decision block 515 determines whether or not there is any data loss. If so, then control is passed to a decision block 520. Otherwise, control is passed to a function block 545.

The decision block 520 determines whether or not there are frame losses or slice losses. If there are frame losses, then control is passed to a function block 525. Otherwise, control is passed to a function block 530.

The function block 525 performs frame-based error concealment, and passes control to a loop limit block 535. The loop limit block 535 ends the loop over each picture in the GOP, and passes control to a function block 540. The function block 540 outputs the GOP, and passes control to an end block 550.

The function block 530 performs slice-based error concealment, and passes control to the loop limit block 535.

The function block 545 performs normal decoding in accordance with the H.264 standard, and passes control to the loop limit block 535.

A description will now be given of some of the many attendant advantages/features of the present invention, some of which have been mentioned above. For example, one advantage/feature is a video encoder including an encoder for encoding a group of pictures by selecting between a frame mode and at least one flexible macroblock ordering mode. The pictures in the group are allowed to be concurrently encoded in different ones of the frame mode and the least one flexible macroblock ordering mode. The mode selection for each of the pictures in the group is based on an achieved maximum error resilience capability for the group of pictures.

Another advantage/feature is the video encoder as described above, wherein the encoder encodes each of the pictures in the group by respectively selecting between the frame mode and the at least one flexible macroblock ordering mode, so that losses in the encoded group of pictures at a decoder are capable of being concealed selectively using any of frame-based and slice-based error concealment methods.

Moreover, another advantage/feature is the video encoder as described above, where the encoder selects an encoding mode for each of the pictures in the group so as to achieve the maximum error resilience capability for the group of pictures under a total bit rate constraint. The encoding mode is selected based upon a rate distortion analysis and optimization.

Further, another advantage/feature is the video encoder as described above, wherein the encoder specifies selected ones of the frame mode and the at least one flexible macroblock ordering mode used to encode respective ones of the pictures in the group in at least one picture parameter set corresponding to the group of pictures.

Also, another advantage/feature is the video encoder as described above, wherein the encoder maintains a specified quantization parameter for each of the pictures in the group of pictures.

Additionally, another advantage/feature is the video encoder as described above, wherein the encoder encodes the group of pictures to provide a resultant bitstream compliant with the International Organization for Standardization/International Electrotechnical Commission Moving Picture Experts Group-4 Part 10 Advanced Video Coding standard/International Telecommunication Union, Telecommunication Sector H.264 standard.

Moreover, another advantage/feature is the video encoder as described above, wherein the encoder pre-encodes each of the pictures in the group using both the frame mode and the at least one flexible macroblock ordering mode to obtain source distortion and bit rate information for use in rendering the encoding mode selection for each of the pictures in the group of pictures from between the frame mode and the at least one flexible macroblock ordering mode.

Further, another advantage/feature is the video encoder as described above, wherein the encoder drops and conceals at least one slice corresponding to at least one of the pictures in the group of pictures, measures a resultant distortion corresponding to the at least one slice across a remainder of the group of pictures for both the frame mode and the at least one flexible macroblock ordering mode, and selects one of the frame mode and a flexible macroblock ordering mode for each of the pictures of the group of pictures based upon the measured distortion.

Also, another advantage/feature is the video encoder as described above, wherein the encoder drops and conceals at least one picture in the group of pictures, measures a resultant distortion corresponding to the at least one picture for both a frame mode and a flexible macroblock ordering mode, and select one of the frame mode and the flexible macroblock ordering mode for each of the pictures of the group of pictures based upon the measured distortion.

These and other features and advantages of the present invention may be readily ascertained by one of ordinary skill in the pertinent art based on the teachings herein. It is to be understood that the teachings of the present invention may be implemented in various forms of hardware, software, firmware, special purpose processors, or combinations thereof.

Most preferably, the teachings of the present invention are implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present invention is programmed. Given the teachings herein, one of ordinary skill in the pertinent art will be able to contemplate these and similar implementations or configurations of the present invention.

Although the illustrative embodiments have been described herein with reference to the accompanying drawings, it is to be understood that the present invention is not limited to those precise embodiments, and that various changes and modifications may be effected therein by one of ordinary skill in the pertinent art without departing from the scope of the present invention. All such changes and modifications are intended to be included within the scope of the present invention as set forth in the appended claims.

**Claims**

1.  An apparatus comprising:

    an encoder (200) adapted to encode a group of pictures by selecting between a frame mode and at least one flexible macroblock ordering mode, wherein the pictures in the group are allowed to be concurrently encoded in different ones of the frame mode and the least one flexible macroblock ordering mode, and the mode selection for each of the pictures in the group is based on an achieved maximum error resilience capability for the group of pictures.

2.  The apparatus of claim 1, wherein said encoder (200) is adapted to specify selected ones of the frame mode and the at least one flexible macroblock ordering mode used to encode respective ones of the pictures in the group in at least one picture parameter set corresponding to the group of pictures.

3.  The apparatus of claim 1, wherein said encoder (200) is adapted to maintain a specified quantization parameter for each of the pictures in the group of pictures.

4.  The apparatus of claim 1, wherein said encoder (200) is adapted to pre-encode each of the pictures in the group using both the frame mode and the at least one flexible macroblock ordering mode to obtain source distortion and bit rate information for use in rendering the encoding mode selection for each of the pictures in the group of pictures from between the frame mode and the at least one flexible macroblock ordering mode.

5.  The apparatus of claim 1, wherein said encoder (200) is adapted to drop and conceal at least one slice corresponding to at least one of the pictures in the group of pictures, to measure a resultant distortion corresponding to the at least one slice across a remainder of the group of pictures for both the frame mode and the at least one flexible macroblock ordering mode, and to select one of the frame mode and a flexible macroblock ordering mode for each of the pictures of the group of pictures based upon the measured distortion.

6.  The apparatus of claim 1, wherein said encoder (200) is adapted to drop and conceal at least one picture in the group of pictures, to measure a resultant distortion corresponding to the at least one picture for both a frame mode and a flexible macroblock ordering mode, and to select one of the frame mode and the flexible macroblock ordering mode for each of the pictures of the group of pictures based upon the measured distortion.

7.  A method for encoding a group of pictures, comprising:

    encoding (472) the group of pictures by selecting between a frame mode and at least one flexible macroblock ordering mode, wherein the pictures in the group are allowed to be concurrently encoded in different ones of the frame mode and the least one flexible macroblock ordering mode, and the mode selection for each of the pictures in the group is based on an achieved maximum error resilience capability for the group of pictures.

8.  The method of claim 7, wherein each of the pictures in the group is encoded by respectively selecting (464) between the frame mode and the at least one flexible macroblock ordering mode, so that losses in the encoded group of pictures at a decoder are capable of being concealed selectively using any of frame-based and slice-based error concealment methods.

9.  The method of claim 7, wherein an encoding mode is selected for each of the pictures in the group so as to achieve the maximum error resilience capability for the group of pictures under a total bit rate constraint, the encoding mode being selected based upon a rate distortion analysis and optimization (432).

10. The method of claim 7, wherein said encoding step comprises specifying (470) selected ones of the frame mode and the at least one flexible macroblock ordering mode used to encode respective ones of the pictures in the group in at least one picture parameter set corresponding to the group of pictures.

11. The method of claim 7, wherein said encoding step comprises maintaining (462) a specified quantization parameter for each of the pictures in the group of pictures.

12. The method of claim 7, wherein the group of pictures are encoded to provide a resultant bitstream compliant with the International Organization for Standardization/International Electrotechnical Commission Moving Picture Experts Group-4 Part 10 Advanced Video Coding standard/International Telecommunication Union, Telecommunication Sector H.264 standard.

13. The method of claim 7, further comprising pre-encoding (408, 436) each of the pictures in the group using both the frame mode and the at least one flexible macroblock ordering mode to obtain source distortion and bit rate information for use in rendering the encoding mode selection for each of the pictures in the group of pictures from between the frame mode and the at least one flexible macroblock ordering mode.

14. The method of claim 7, wherein said encoding step comprises:

dropping and concealing (448) at least one slice corresponding to at least one of the pictures in the group of pictures;
measuring (452) a resultant distortion corresponding to the at least one slice across a remainder of the group of pictures for both the frame mode and the at least one flexible macroblock ordering mode; and
selecting (464) one of the frame mode and a flexible macroblock ordering mode for each of the pictures of the group of pictures based upon the measured distortion.

15. The method of claim 7, wherein said encoding step comprises:

dropping and concealing (420) at least one picture in the group of pictures;
measuring (424) a resultant distortion corresponding to the at least one picture for both a frame mode and a flexible macroblock ordering mode; and
selecting (464) one of the frame mode and the flexible macroblock ordering mode for each of the pictures of the group of pictures based upon the measured distortion.

**Patentansprüche**

1. Vorrichtung, die umfasst:

einen Codierer (200), der dafür ausgelegt ist, eine Bildgruppe durch Auswählen zwischen einer Einzelbildbetriebsart und mindestens einer Betriebsart der flexiblen Makroblockanordnung zu codieren, wobei zugelassen ist, dass die Bilder in der Gruppe gleichzeitig in unterschiedlichen der Einzelbildbetriebsart und der mindestens einen Betriebsart der flexiblen Makroblockanordnung codiert werden, und wobei die Betriebsartauswahl für jedes der Bilder in der Gruppe auf einer erreichten maximalen Fehlerelastizitätsfähigkeit für die Bildgruppe beruht.

2. Vorrichtung nach Anspruch 1, wobei der Codierer (200) dafür ausgelegt ist, Ausgewählte der Einzelbildbetriebsart und der mindestens einen Betriebsart der flexiblen Makroblockanordnung, die zum Codieren jeweiliger der Bilder in der Gruppe verwendet werden, in mindestens einem der Bildgruppe entsprechenden Bildparametersatz zu spezifizieren.

3. Vorrichtung nach Anspruch 1, wobei der Codierer (200) dafür ausgelegt ist, für jedes der Bilder in der Bildgruppe einen spezifizierten Quantisierungsparameter zu unterhalten.

4. Vorrichtung nach Anspruch 1, wobei der Codierer (200) dafür ausgelegt ist, jedes der Bilder in der Gruppe sowohl unter Verwendung der Einzelbildbetriebsart als auch der mindestens einen Betriebsart der flexiblen Makroblockanordnung vorzucodieren, um Quellenverzerrungs-und Bitrateninformationen zur Verwendung beim Treffen der Codierungsbetriebsartauswahl für jedes der Bilder in der Bildgruppe zwischen der Einzelbildbetriebsart und der mindestens einen Betriebsart der flexiblen Makroblockanordnung zu erhalten.

5. Vorrichtung nach Anspruch 1, wobei der Codierer (200) dafür ausgelegt ist, mindestens ein dem mindestens einen der Bilder in der Bildgruppe entsprechendes Slice zu verwerfen und zu verbergen, um sowohl für die Einzelbildbetriebsart als auch für die mindestens eine Betriebsart der flexiblen Makroblockanordnung eine dem mindestens einen Slice entsprechende resultierende Verzerrung über einen Rest der Bildgruppe zu messen und für jedes der Bilder der Bildgruppe auf der Grundlage der gemessenen Verzerrung die Einzelbildbetriebsart oder eine Betriebsart der flexiblen Makroblockanordnung auszuwählen.

6. Vorrichtung nach Anspruch 1, wobei der Codierer (200) dafür ausgelegt ist, mindestens ein Bild in der Bildgruppe zu verwerfen und zu verbergen, um sowohl für eine Einzelbildbetriebsart als auch für eine Betriebsart der flexiblen Makroblockanordnung eine dem mindestens einen Bild entsprechende resultierende Verzerrung zu messen und für jedes der Bilder der Bildgruppe auf der Grundlage der gemessenen Verzerrung die Einzelbildbetriebsart oder die Betriebsart der flexiblen Makroblockanordnung auszuwählen.

7. Verfahren zum Codieren einer Bildgruppe, wobei das Verfahren umfasst:

   Codieren (472) der Bildgruppe durch Auswählen zwischen einer Einzelbildbetriebsart und mindestens einer Betriebsart der flexiblen Makroblockanordnung, wobei zugelassen ist, dass die Bilder in der Gruppe in unterschiedlichen der Einzelbildbetriebsart und der mindestens einen Betriebsart der flexiblen Makroblockanordnung gleichzeitig codiert werden, und
   wobei die Betriebsartauswahl für jedes der Bilder in der Gruppe auf einer erzielten maximalen Fehlerelastizitätsfähigkeit für die Bildgruppe beruht.

8. Verfahren nach Anspruch 7, wobei jedes der Bilder in der Gruppe jeweils durch Auswählen (464) zwischen der Einzelbildbetriebsart und der mindestens einen Betriebsart der flexiblen Makroblockanordnung codiert wird, so dass Verluste in der codierten Bildgruppe bei einem Decodierer unter Verwendung irgendeines von auf Einzelbildern beruhenden und auf Slices beruhenden Fehlerverbergungsverfahrens wahlweise verborgen werden können.

9. Verfahren nach Anspruch 7, wobei eine Codierungsbetriebsart für jedes der Bilder in der Gruppe so ausgewählt wird, dass für die Bildgruppe unter einer Gesamtbitratenbeschränkung die maximale Fehlerelastizitätsfähigkeit erzielt wird, wobei die Codierungsbetriebsart auf der Grundlage einer Ratenverzerrungsanalyse und -optimierung (432) ausgewählt wird.

10. Verfahren nach Anspruch 7, wobei der Codierungsschritt das Spezifizieren (470) Ausgewählter der Einzelbildbetriebsart und der mindestens einen Betriebsart der flexiblen Makroblockanordnung, die zum Codieren jeweiliger der Bilder in der Gruppe verwendet werden, in mindestens einem der Bildgruppe entsprechenden Bildparametersatz umfasst.

11. Verfahren nach Anspruch 7, wobei der Codierungsschritt das Unterhalten (462) eines spezifizierten Quantisierungsparameters für jedes der Bilder in der Bildgruppe umfasst.

12. Verfahren nach Anspruch 7, wobei die Bildgruppe codiert wird, um einen resultierenden Bitstrom bereitzustellen, der konform zu dem International Organization for Standardization/International Electrotechnical Commission Moving Picture Experts Group-4, Teil 10, Advanced Video Coding-Standard/International Telecommunication Union, Telecommunication Sector, Standard H.264 ist.

13. Verfahren nach Anspruch 7, das ferner das Vorcodieren (408, 436) jedes der Bilder in der Gruppe sowohl unter Verwendung der Einzelbildbetriebsart als auch der mindestens einen Betriebsart der flexiblen Makroblockanordnung umfasst, um Quellenverzerrungs- und Bitrateninformationen zur Verwendung beim Treffen der Codierungsbetriebsartauswahl für jedes der Bilder in der Bildgruppe zwischen der Einzelbildbetriebsart und der mindestens einen Betriebsart der flexiblen Makroblockanordnung zu erhalten.

14. Verfahren nach Anspruch 7, wobei der Codierungsschritt umfasst:

    Verwerfen und Verbergen (448) mindestens eines mindestens einem der Bilder in der Bildgruppe entsprechenden Slices; Messen (452) einer dem mindestens einen der Slices entsprechenden resultierenden Verzerrung über einen Rest der Bildgruppe sowohl für die Einzelbildbetriebsart als auch für die mindestens eine Betriebsart der flexiblen Makroblockanordnung; und

Auswählen (464) der Einzelbildbetriebsart oder einer Betriebsart der flexiblen Makroblockanordnung für jedes der Bilder der Bildgruppe auf der Grundlage der gemessenen Verzerrung.

**15.** Verfahren nach Anspruch 7, wobei der Codierungsschritt umfasst:

Verwerfen und Verbergen (420) mindestens eines Bilds in der Bildgruppe;

Messen (424) einer dem mindestens einen Bild entsprechenden resultierenden Verzerrung sowohl für eine Einzelbildbetriebsart als auch für eine Betriebsart der flexiblen Makroblockanordnung; und

Auswählen (464) der Einzelbildbetriebsart oder der Betriebsart der flexiblen Makroblockanordnung für jedes der Bilder der Bildgruppe auf der Grundlage der gemessenen Verzerrung.

## Revendications

**1.** Appareil comprenant :

un codeur (200) adapté pour coder un groupe d'images par la sélection entre un mode trame et au moins un mode ordonnancement flexible de macroblocs, dans lequel les images du groupe peuvent être codées simultanément en d'autres images du mode trame et du au moins un mode ordonnancement flexible de macroblocs et la sélection de mode pour chaque image du groupe est basée sur une capacité de tolérance aux erreurs maximale atteinte du groupe d'images.

**2.** Appareil selon la revendication 1, dans lequel ledit codeur (200) est adapté pour spécifier la sélection entre le mode trame et le au moins un mode ordonnancement flexible de macroblocs utilisée pour coder les images respectives du groupe en au moins un ensemble de paramètres d'images correspondant au groupe d'images.

**3.** Appareil selon la revendication 1, dans lequel ledit codeur (200) est adapté pour conserver un paramètre de quantification spécifié pour chaque image du groupe d'images.

**4.** Appareil selon la revendication 1, dans lequel ledit codeur (200) est adapté pour pré-coder chaque image du groupe à l'aide du mode trame et du au moins un mode ordonnancement flexible de macroblocs pour obtenir des informations sur la distorsion de la source et le débit binaire à utiliser dans le rendu de la sélection du mode de codage pour chaque image du groupe d'images entre le mode trame et le au moins un mode ordonnancement flexible de macroblocs.

**5.** Appareil selon la revendication 1, dans lequel ledit codeur (200) est adapté pour écarter et dissimuler au moins une tranche correspondant à au moins une des images du groupe d'images, pour mesurer une distorsion générée correspondant à la au moins une tranche sur un reste du groupe d'images pour le mode trame et le au moins un mode ordonnancement flexible de macroblocs et pour la sélection entre le mode trame et un mode ordonnancement flexible de macroblocs pour chaque image du groupe d'images d'après la distorsion mesurée.

**6.** Appareil selon la revendication 1, dans lequel ledit codeur (200) est adapté pour écarter et dissimuler au moins une image du groupe d'images, pour mesurer une distorsion générée correspondant à la au moins une image pour un mode trame et un mode ordonnancement flexible de macroblocs et pour la sélection entre le mode trame et le mode ordonnancement flexible de macroblocs pour chaque image du groupe d'images d'après la distorsion mesurée.

**7.** Procédé de codage d'un groupe d'images comprenant :

le codage (472) du groupe d'images par la sélection entre un mode trame et au moins un mode ordonnancement flexible de macroblocs, dans lequel les images du groupe peuvent être codées simultanément en d'autres images du mode trame et du au moins un mode ordonnancement flexible de macroblocs et la sélection de mode pour chaque image du groupe est basée sur une capacité de tolérance aux erreurs maximale atteinte du groupe d'images.

**8.** Procédé selon la revendication 7, dans lequel chaque image du groupe est codée par la sélection respective (464) entre le mode trame et le au moins un mode ordonnancement flexible de macroblocs, de sorte que les pertes dans le groupe d'images codé au niveau d'un décodeur puissent être dissimulées de façon sélective à l'aide d'une méthode de dissimulation des erreurs basée sur les trames ou sur les tranches.

9. Procédé selon la revendication 7, dans lequel un mode de codage est sélectionné pour chaque image du groupe de sorte à atteindre la capacité de tolérance aux erreurs maximale pour le groupe d'images sous une contrainte de débit binaire total, le mode de codage étant sélectionné à partir d'une analyse de distorsion et d'une optimisation du débit (432).

10. Procédé selon la revendication 7, dans lequel ladite étape de codage comprend la spécification (470) d'une sélection entre le mode trame et le au moins un mode ordonnancement flexible de macroblocs utilisé pour coder les images respectives du groupe en au moins un ensemble de paramètres d'images correspondant au groupe d'images.

11. Procédé selon la revendication 7, dans lequel ladite étape de codage comprend la conservation (462) d'un paramètre de quantification spécifié pour chaque image du groupe d'images.

12. Procédé selon la revendication 7, dans lequel le groupe d'images est codé pour fournir un train de bits généré conforme à la norme ISO/CEI MPEG-4 Part 10 Advanced Video Coding/recommandation H.264 de l'Union Internationale des Télécommunications.

13. Procédé selon la revendication 7, comprenant en outre le pré-codage (408, 436) de chaque image du groupe à l'aide du mode trame et du au moins un mode ordonnancement flexible de macroblocs pour obtenir des informations sur la distorsion de la source et le débit binaire à utiliser dans le rendu de la sélection du mode de codage pour chaque image du groupe d'images entre le mode trame et le au moins un mode ordonnancement flexible de macroblocs.

14. Procédé selon la revendication 7, dans lequel ladite étape de codage comprend : la mise à l'écart et la dissimulation (448) d'au moins une tranche correspondant à au moins une des images du groupe d'images ;
la mesure (452) d'une distorsion générée correspondant à la au moins une tranche sur un reste du groupe d'images pour le mode trame et le au moins un mode ordonnancement flexible de macroblocs ; et
la sélection (464) entre un mode trame et un mode ordonnancement flexible de macroblocs pour chaque image du groupe d'images d'après la distorsion mesurée.

15. Procédé selon la revendication 7, dans lequel ladite étape de codage comprend :

la mise à l'écart et la dissimulation (420) d'au moins une image du groupe d'images ;
la mesure (424) d'une distorsion générée correspondant à la au moins une image pour un mode trame et un mode ordonnancement flexible de macroblocs ;
et la sélection entre le mode trame et le mode ordonnancement flexible de macroblocs pour chaque image du groupe d'images d'après la distorsion mesurée.

100

150

slice 1

slice 2

slice group 1

slice group 2

FIG. 1A

FIG. 1B

FIG. 2

FIG. 3

EP 1 964 411 B1

FIG. 4A

FIG. 4B

500

```
                    ┌─────────────────┐
                    │   Input GOP     │──505
                    └────────┬────────┘
                             ▼
                    ┌─────────────────┐
                    │  Each Picture   │──510
                    │   in the GOP    │
                    └────────┬────────┘
                             ▼
                           515
                  No   ◇─────────────◇   Yes
              ┌───────  Data loss?  ───────┐
              │        ◇─────────────◇     │
              ▼                             ▼
     ┌─────────────────┐                  520
     │ Normal H.264/   │──545    frame ◇─────────────◇ FMO
     │  AVC decoding   │      ┌─────── Frame loss/ ───────┐
     │   processes     │      │        slice loss?        │
     └────────┬────────┘      │        ◇─────────────◇    │
              │               ▼                           ▼
              │      ┌─────────────────┐        ┌─────────────────┐
              │  525─│ Frame-based error │      │ slice-based error │
              │      │   concealment    │  530─│   concealment    │
              │      └────────┬────────┘        └────────┬────────┘
              └──────────●────┴──────●───────────────────┘
                              ▼
                    ┌─────────────────┐
                    │  End of the GOP │──535
                    └────────┬────────┘
                             ▼
                    ┌─────────────────┐
                    │   Output GOP    │──540
                    └────────┬────────┘
                             ▼
                        ┌─────────┐
                        │   End   │──550
                        └─────────┘
```

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LAMBERT et al.** Flexible macroblock ordering in H.264/AVC. *Journal of Visual Communication and Image Representation,* 11 August 2005, vol. 17 (2), 358-375